# FASCICULE DE BREVET EUROPEEN

(11) **EP 2 258 102 B1**
(45) Date de publication et mention de la délivrance du brevet: **10.09.2014**
(21) Numéro de dépôt: 09754048.8
(22) Date de dépôt: 24.03.2009
(51) Int. Cl.: H04M 1/60, H04M 1/02

(54) **REGLAGE DU VOLUME SONORE D'UN DISPOSITIF ELECTRONIQUE**
ANPASSUNG DES SCHALLVOLUMENS EINES ELEKTROGERÄTES
ADJUSTING THE SOUND VOLUME OF AN ELECTRONIC DEVICE

(30) Priorité: 26.03.2008 FR 0801644
(43) Date de publication de la demande: 08.12.2010
(73) Titulaire: Bazile Telecom, 13590 Meyreuil (FR)
(72) Inventeur: PEYRE, Jean-François, F-13790 Rousset (FR)
(74) Mandataire: Renaud-Goud, Thierry
(86) Numéro de dépôt international: PCT/FR2009/000316
(87) Numéro de publication internationale: WO 2009/144398

(56) Documents cités:
- EP-A- 1 748 631
- EP-A1- 0 957 619
- WO-A-00/57616
- US-A1- 2004 259 536
- US-A1- 2006 060 762

## Description

La présente invention a pour objet un procédé de réglage du volume sonore d'un appareil électronique utilisant un détecteur de type accéléromètre.

Ce système est particulièrement adapté à un terminal de téléphonie sans fil ou mobile. En effet, ces terminaux intègrent de plus en plus de fonctionnalités et la facilité d'usage apportée par la présente invention leur est très avantageuse.

Les accéléromètres, mesurant deux ou trois axes, sont couramment utilisés dans les téléphones mobiles modernes, pour des fonctions telles que l'orientation de l'affichage, rotation, sélection du mode 'portrait' ou 'paysage', navigation dans les menus par secousses, correction du flou des images numériques engendré par les vibrations et le mouvement, détection de chute ou de vol, détection d'absence de mouvement pour sélection d'un mode basse consommation.

Maintenant, ils sont également utilisés pour régler le volume du son lors d'une conversation. Ainsi, les documents WO 00/57616 et EP 1 748 631 décrivent tous deux un dispositif comprenant un détecteur d'inclinaison pour régler le volume sonore. Le réglage du volume comporte au moins deux plages, une première plage avec réglage de volume au maximum correspondant au cas où le dispositif est positionné horizontalement face vers le haut, permettant de le faire fonctionner en mode « mains libres », et une deuxième plage avec réglage de volume plus faible, activée dès que le dispositif quitte cette position horizontale pour fonctionner en mode « écouteur ».

Il apparaît cependant qu'en certaines circonstances il est souhaitable d'interrompre provisoirement la conversation téléphonique tout en conservant la communication.

La présente invention a ainsi pour objet d'offrir cette caractéristique additionnelle.

Selon l'invention un dispositif électronique comprend un microphone, un haut-parleur et une sonnerie, et comprend également au moins un détecteur d'inclinaison utilisé pour régler le volume du son, le réglage du volume comportant au moins deux plages, une plage avec réglage de volume élevé correspondant au cas où le dispositif est positionné horizontalement face vers le haut permettant de le faire fonctionner en mode mains libres, et une plage avec réglage de volume faible activée lorsque le dispositif est en dehors de cette position horizontale pour fonctionner en mode écouteur ; de plus, le réglage du volume comporte une troisième plage définissant un mode silencieux, lorsque le dispositif est positionné horizontalement face vers le bas.

On obtient ainsi un mode de réglage très aisé et très intuitif, particulièrement adapté à la simplification de l'usage d'un dispositif électronique et d'un téléphone mobile en particulier.

Avantageusement, le microphone et/ou le haut-parleur, et/ou la sonnerie est désactivé dans le mode silencieux.

Suivant un mode de réalisation préférentiel, le détecteur d'inclinaison consiste en un ou plusieurs accéléromètres micro-usinés pour détecter l'inclinaison suivant un, deux ou trois axes orthogonaux, longitudinal (X) et transversal (Z).

De préférence, l'inclinaison est moyennée sur plusieurs échantillons successifs, pour s'affranchir des variations de mesure induites par les vibrations et par le mouvement propre du dispositif.

Il est souhaitable que le fonctionnement en mode mains libres ne soit autorisé que si l'inclinaison par rapport à l'horizontale selon l'axe latéral (Y) est inférieure à une valeur prédéfinie.

Optionnellement, le réglage de volume peut être mémorisé par application d'une commande, de façon à conserver ce réglage pendant les déplacements ultérieurs du dispositif et jusqu'au déblocage de cette fonction de mémorisation.

Selon une caractéristique additionnelle de l'invention, le mode mains libres n'est activé que si les variations de l'inclinaison restent dans des limites prédéfinies.

De plus, le mode mains libres est activé progressivement, alors que le mode écouteur est activé immédiatement, de manière à éviter le passage intempestif en fort volume pendant le mouvement.

Par ailleurs, si le dispositif prend la forme d'un boîtier qui comporte au moins deux parties articulées entre elles, le détecteur d'inclinaison étant attaché à une première partie du boîtier, ce dispositif comporte avantageusement un détecteur additionnel attaché à la deuxième partie pour ajuster le volume en fonction de l'angle que forment ces deux parties.

L'invention sera mieux comprise, et d'autres buts, avantages et caractéristiques de celle-ci apparaîtront plus clairement à la lecture de la description qui suit de modes préférés de réalisation donnés à titre non limitatif et à laquelle une planche de dessins est annexée sur laquelle :
- la figure 1 illustre un exemple non limitatif avec deux modes de fonctionnement, le mode mains libres correspondant au cas où le dispositif est proche de l'horizontale face vers le haut, et le mode écouteur lorsque le dispositif est écarté de l'horizontale, et
- la figure 2 illustre schématiquement les trois axes (X, Y, Z) pouvant servir de façon non limitative à définir la position du dispositif dans l'espace.

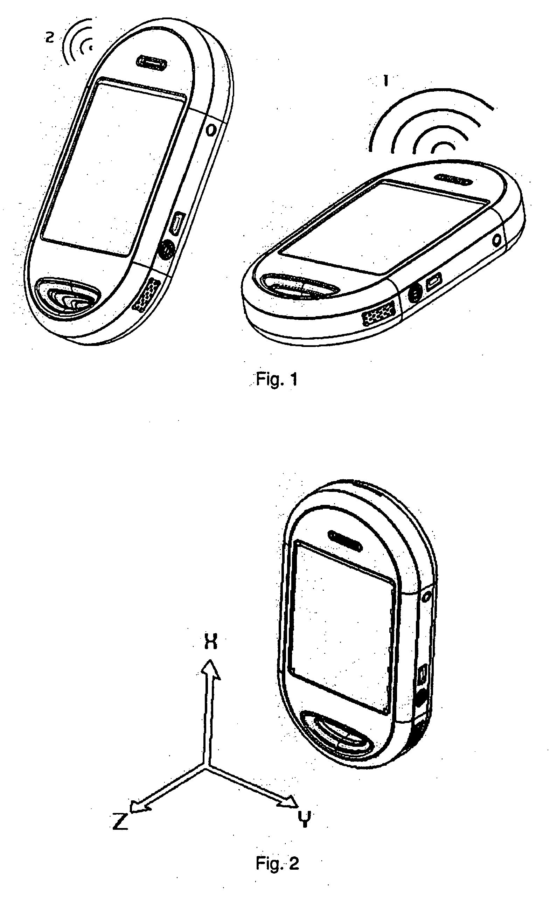

Suivant la figure 2, on utilisera principalement la mesure selon l'axe transversal (Z) pour définir l'horizontalité du dispositif, mais on pourra avantageusement utiliser les deux autres axes (X, Y) pour raffiner le mode de réglage.

La position horizontale face vers le haut correspond en effet à un extremum de la mesure selon l'axe (Z), un minimum ou un maximum suivant l'orientation du détecteur, la valeur absolue de l'accélération mesurée étant alors sensiblement égale à la gravité. Un simple test de cette valeur pour la comparer à un seuil prédéfini permet donc d'activer ou non le mode à fort volume dit mode mains libres.

Cependant, l'accélération suivant l'axe (Y) peut être utilisée pour autoriser également le mode mains libres lorsque le dispositif se trouve incliné au delà de l'horizontale, tête en bas, car une telle position correspond à une mesure sur l'axe (Z) identique au mode vertical normal devant correspondre au mode à volume faible dit mode écouteur.

De plus, l'accélération suivant l'axe (X) peut être utilisée pour mieux valider l'horizontalité en évitant une fausse détection due au mouvement du dispositif.

La présente invention propose donc un dispositif électronique utilisant au moins un détecteur d'inclinaison pour régler le volume sonore émis.

De façon non limitative, la détection d'inclinaison est réalisée par un ou plusieurs accéléromètres micro-usinés, détectant l'inclinaison suivant un, deux ou trois axes orthogonaux, longitudinal (X), latéral (Y) et transversal (Z).

Dans un mode de réalisation préférentiel, les mesures d'inclinaison sont moyennées sur plusieurs échantillons successifs, par exemple par la technique de la moyenne glissante, pour s'affranchir des variations de mesure induites par les vibrations et le mouvement du dispositif.

De façon avantageuse, le réglage du volume comporte trois plages, une première plage (1) avec réglage fort du volume (éventuellement au maximum), correspondant au cas où le dispositif est positionné horizontalement face vers le haut, permettant de le faire fonctionner en mode mains libres, une deuxième plage (2) avec réglage de volume plus faible, activée dès que le dispositif est en dehors de cette position horizontale, pour fonctionner en mode écouteur et une troisième plage définissant un mode silencieux par exemple lorsque le dispositif est positionné horizontalement face vers le bas.

La présente invention peut être appliquée à un terminal téléphonique dans lequel le détecteur d'inclinaison règle, de façons indépendantes, les volumes sonores du ou des haut-parleurs et de la sonnerie, avec par exemple une suppression du volume de sonnerie lorsque le terminal est placé face vers le bas.

Un tel terminal téléphonique peut avantageusement utiliser le détecteur d'inclinaison pour définir une plage où le microphone est désactivé, par exemple en mode silencieux durant une conversation.

Dans tout dispositif objet de la présente invention, le fonctionnement à fort volume pourra être activé essentiellement par la mesure de l'accélération selon l'axe transversal (Z).

Dans un mode particulier de réalisation, le fonctionnement à fort volume n'est autorisé que si l'inclinaison par rapport à l'horizontale selon l'axe latéral (Y) est inférieure à une valeur prédéfinie, par exemple 15 degrés.

De façon non limitative, le réglage de volume défini par le détecteur peut être mémorisé par application d'une commande mécanique, vocale ou autre, de façon à conserver ledit réglage de volume pendant les déplacements ultérieurs du dispositif et jusqu'au déblocage de cette fonction de mémorisation.

Dans un mode de réalisation préférentiel, le fonctionnement à fort volume n'est autorisé que lorsque l'on détecte que le terminal est au repos en observant que les accélérations mesurées par l'accéléromètre varient moins que des limites prédéfinies, par exemple moins de 5 pour cent pendant 2 secondes.

De façon avantageuse, le mode à fort volume est activé progressivement avec un retard ou un temps de montée de quelques secondes, alors que le mode à faible volume est activé immédiatement, de manière à éviter le passage intempestif en fort volume pendant le mouvement.

Suivant un mode de réalisation préférentiel de la présente invention, le boîtier du dispositif comporte au moins deux parties articulées entre elles. Un premier détecteur d'inclinaison attaché à une première partie du boîtier, par exemple la partie basse, autorise le passage en mode mains libres lorsque cette partie est détectée être proche de l'horizontale, alors qu'un second détecteur d'inclinaison, par exemple un accéléromètre à un seul axe de détection, attaché à la deuxième partie, ajuste plus finement ledit volume, par exemple en fonction de l'angle d'ouverture d'articulation reliant les deux parties.

Le positionnement des divers éléments constitutifs donne à l'objet de l'invention un maximum d'effets utiles qui n'avaient pas été, à ce jour, obtenus par des dispositifs similaires.

## Revendications

1. Dispositif portable de téléphonie comprenant un microphone, un haut-parleur et une sonnerie, dispositif comprenant également au moins un détecteur d'inclinaison utilisé pour régler le volume du son durant une conversation téléphonique, le réglage du volume comportant au moins trois plages, une première plage (1) avec réglage de volume fort correspondant au cas où le dispositif est positionné horizontalement face vers le haut permettant de le faire fonctionner en mode mains libres, une deuxième plage (2) avec réglage de volume faible activée lorsque le dispositif est en dehors de cette position horizontale pour fonctionner en mode écouteur, et une troisième plage définissant un mode silencieux lorsque le dispositif est positionné horizontalement face vers le bas,
**caractérisé en ce que** ledit microphone est désactivé dans ledit mode silencieux.

2. Dispositif suivant la revendication 1, **caractérisé en ce que** ladite sonnerie est désactivée dans ledit mode silencieux.

3. Dispositif suivant l'une quelconque des revendications précédentes, **caractérisé en ce que** ledit détecteur d'inclinaison consiste en un ou plusieurs accéléromètres micro-usinés pour détecter l'inclinaison suivant un, deux ou trois axes orthogonaux, longitudinal (X) et transversal (Z).

4. Dispositif suivant l'une quelconque des revendications précédentes, **caractérisé en ce que** ladite inclinaison est moyennée sur plusieurs échantillons successifs, pour s'affranchir des variations de mesure induites par les vibrations et par son propre mouvement.

5. Dispositif suivant l'une quelconque des revendications précédentes **caractérisé en ce que** le fonctionnement en mode mains libres n'est autorisé que si l'inclinaison par rapport à l'horizontale selon l'axe latéral (Y) est inférieure à une valeur prédéfinie.

6. Dispositif suivant l'une quelconque des revendications précédentes, **caractérisé en ce que** le réglage de volume peut être mémorisé par application d'une commande, de façon à conserver ledit réglage pendant ses déplacements ultérieurs et jusqu'au déblocage de cette fonction de mémorisation.

7. Dispositif suivant l'une quelconque des revendications précédentes **caractérisé en ce que** ledit mode mains libres n'est activé que si les variations de ladite inclinaison restent dans des limites prédéfinies.

8. Dispositif suivant l'une quelconque des revendications précédentes, **caractérisé en ce que** ledit mode mains libres est activé progressivement, alors que le mode écouteur est activé immédiatement, de manière à éviter le passage intempestif en fort volume pendant le mouvement.

9. Dispositif suivant l'une quelconque des revendications précédentes **caractérisé en ce que**, prenant la forme d'un boîtier qui comporte au moins deux parties articulées entre elles, ledit détecteur d'inclinaison étant attaché à une première partie du boîtier, il comporte un détecteur additionnel attaché à la deuxième partie pour ajuster ledit volume en fonction de l'angle que forment ces deux parties.

## Patentansprüche

1. Tragbare Telefonvorrichtung, die ein Mikrofon, einen Lautsprecher und ein Läutwerk enthält, wobei die Vorrichtung ebenfalls mindestens einen Neigungsdetektor enthält, der verwendet wird, um die Lautstärke während eines Telefongesprächs zu regeln, wobei die Regelung der Lautstärke mindestens drei Bereiche aufweist, einen ersten Bereich (1) mit Regelung auf hoher Lautstärke entsprechend dem Fall, in dem die vorrichtung waagrecht mit der Vorderseite nach oben positioniert ist, was ihren Betrieb im Freisprechmodus erlaubt, einen zweiten Bereich (2) mit Regelung auf geringer Lautstärke, der eingeschaltet wird, wenn die Vorrichtung sich außerhalb dieser waagrechten Stellung befindet, um im Hörermodus zu arbeiten, und einen dritten Bereich, der einen Stummschaltmodus definiert, wenn die Vorrichtung waagrecht mit der Vorderseite nach unten positioniert ist,
**dadurch gekennzeichnet, dass** das Mikrofon im Stummschaltmodus ausgeschaltet ist.

2. Vorrichtung nach Anspruch 1, **dadurch gekennzeichnet, dass** das Läutwerk im Stummschaltmodus ausgeschaltet ist.

3. Vorrichtung nach einem der vorhergehenden Ansprüche, **dadurch gekennzeichnet, dass** der Neigungsdetektor aus einem oder mehreren mikrobearbeiteten Beschleunigungsmessern besteht, um die Neigung gemäß einer, zwei oder drei orthogonalen. Längs- (X) und Querachsen (z) zu erfassen.

4. Vorrichtung nach einem der vorhergehenden Ansprüche, **dadurch gekennzeichnet, dass** die Neigung über mehrere aufeinanderfolgende Proben gemittelt wird, um sich von Messschwankungen zu befreien, die durch die Vibrationen und ihre eigene Bewegung induziert werden.

5. Vorrichtung nach einem der vorhergehenden Ansprüche, **dadurch gekennzeichnet, dass** der Betrieb im Freisprechmodus nur erlaubt wird, wenn die Neigung bezüglich der Waagrechten gemäß der Seitenachse (Y) geringer als ein vorab definierter Wert ist.

6. Vorrichtung nach einem der vorhergehenden Ansprüche, **dadurch gekennzeichnet, dass** die Lautstärkenregelung durch Anwendung eines Befehls gespeichert werden kann, um die Regelung während ihrer späteren Bewegungen und bis zum Entsperren dieser Speicherfunktion beizubehalten.

7. Vorrichtung nach einem der vorhergehenden Ansprüche, **dadurch gekennzeichnet, dass** der Freisprechmodus nur eingeschaltet wird, wenn die Schwankungen der Neigung in vorab definierten Grenzen bleiben.

8. Vorrichtung nach einem der vorhergehenden Ansprüche, **dadurch gekennzeichnet, dass** der Freisprechmodus progressiv eingeschaltet wird, während der Hörermodus direkt eingeschaltet wird, um während der Bewegung den unerwünschten Übergang in die hohe Lautstärke zu vermeiden.

9. Vorrichtung nach einem der vorhergehenden Ansprüche, **dadurch gekennzeichnet, dass** sie, indem sie die Form eines Gehäuses annimmt, das mindestens zwei aneinander angelenkte Teile aufweist, wobei der Neigungsdetektor an einem ersten Teil des Gehäuses befestigt ist, einen zusätzlichen Detektor aufweist, der am zweiten Teil befestigt ist, um die Lautstärke abhängig von dem Winkel anzupassen, den diese zwei Teile bilden.

## Claims

1. An electronic device comprising a microphone, a loudspeaker, and a ringer, the device also comprising at least one inclination detector used for setting sound volume during a telephone call, the volume setting having at least three ranges, a first range (1) with a loud volume setting corresponding to circumstances in which the device is positioned horizontally and face-up, enabling it to operate in a hands-free mode, a second range (2) with the volume set to low volume that is activated when the device departs from said horizontal position so as to operate in listener mode, and a third range defining a silent mode when the device is positioned horizontally and face-down,
**characterized in that** said microphone is deactivated in said silent mode.

2. A device according to claim 1, **characterized in that** said ringer is deactivated in said silent mode.

3. A device according to any preceding claim, **characterized in that** said inclination detector consists in one or more micro-machined accelerometers for detecting inclination relative to one, two, or three orthogonal axes, a longitudinal axis (X) and a transverse axis (Z).

4. A device according to any preceding claim, **characterized in that** said inclination is averaged over a plurality of successive samples in order to be unaffected by measurement variations induced by vibrations and movement of the device.

5. A device according to any preceding claim, **characterized in that** hands-free mode operation is authorized only if the inclination relative to the horizontal relative to the lateral axis (Y) is less than a predefined value.

6. A device according to any preceding claim, **characterized in that** the volume setting may be stored by applying a command so that said setting is conserved during subsequent movement of the device and until said memory function is released.

7. A device according to any preceding claim, **characterized in that** said hands-free mode is activated only if the variations in said inclination remain within predefined limits.

8. A device according to any preceding claim, **characterized in that** said hands-free mode is activated progressively, whereas listener mode is activated immediately so as to avoid untimely switching to loud volume while in movement.

9. A device according to any preceding claim, **characterized in that** the device is in the form of a casing having at least two portions that are hinged together, with said inclination detector being attached to a first portion of the casing, and the device including an additional detector attached to the second portion in order to adjust said volume as a function of the angle formed between the two portions.
